# EUROPEAN PATENT APPLICATION

(11) **EP 4 287 376 A1**
(43) Date of publication of application: **06.12.2023**
(21) Application number: 22745694.4
(22) Date of filing: 20.01.2022
(51) Int. Cl.: H01M 50/213, H01M 50/262

(54) **BATTERY PACK**

(30) Priority: 28.01.2021 JP 2021011651
(71) Applicant: Panasonic Energy Co., Ltd., Osaka 570-8511 (JP)
(72) Inventor: OSHIMA, Yasufumi, Kadoma-shi Osaka 571-0057 (JP); FUKUDA, Shinsuke, Kadoma-shi Osaka 571-0057 (JP)
(74) Representative: Novagraaf International SA
(86) International application number: PCT/JP2022/001887
(87) International publication number: WO 2022/163473

(57) **Abstract**

A core block accommodated in an outer case is effectively prevented from moving relative to the outer case. A main tubular part is thin and light at low cost, and openings at both ends of the main tubular part are precisely covered with covering parts. A battery pack includes: a core block (10) including battery blocks (9) stacked and interconnected each including battery cells (1) arranged at predetermined positions in a battery holder; an outer case (3) including a main tubular part (4) with a tubular shape having the core block (10) inserted therein, and a pair of covering parts (5) covering openings at both ends of the main tubular part (4); and a fastening member (6) fastening the covering parts (5) to main tubular part (4) from both sides of main tubular part (4). The core block (10) is accommodated in an outer case (3) such that the battery blocks (9) are stacked in an axial direction of main tubular part (4). The fastening member (6) fastens the covering parts (5) through the core block (10).

## Description

### TECHNICAL FIELD

The present invention relates to a battery pack that accommodates core blocks stacked and interconnected to one another each including battery cells arranged at predetermined positions in a battery holder.

### BACKGROUND ART

A battery pack including battery cells connected in series and parallel to one another is used for applications requiring large power, such as a battery-assisted bicycle and an assistant bicycle. In this battery pack, the number of series-connected batteries may be increased to increase an output voltage (V), and the number of parallel-connected batteries may be increased to increase a battery capacity (Ah).

As a battery pack of this application, there has been developed a battery pack in which cylindrical batteries are arranged at predetermined positions with a battery holder and accommodated in an outer case (see PTL 1).

### Citation List

### Patent Literature

PTL 1: Japanese Patent Lid-Open Publication No. 2011-216366

### SUMMARY OF THE INVENTION

### Technical Problem

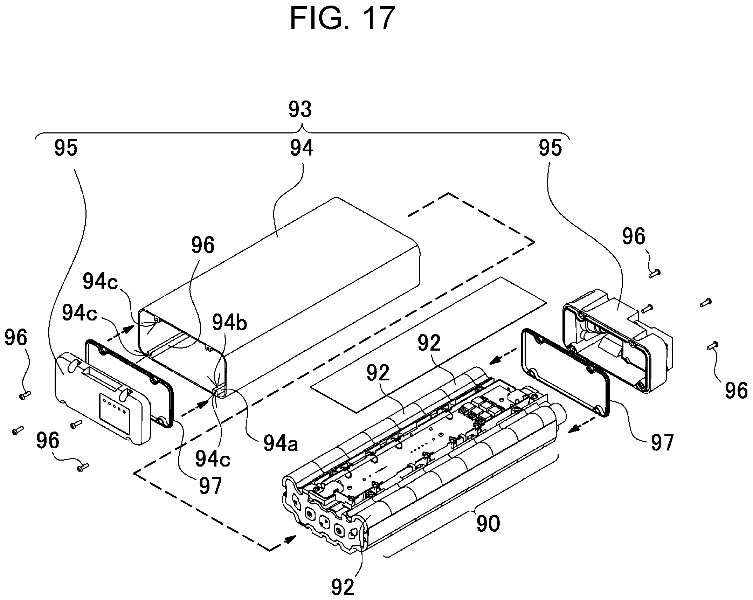

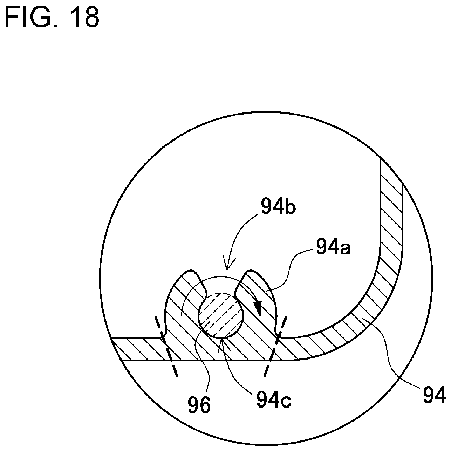

FIG. 17 is an exploded perspective view of a battery pack of PTL 1. In this battery pack, battery cells are arranged at predetermined positions in battery holder 92 to constitute core block 90, and core block 90 is inserted into outer case 93. Both end surfaces of case body 94 with a tubular shape are covered with end plates 95, and core block 90 is accommodated in outer case 93. Case body 94 has a rectangular tubular shape with both ends opening. In order to fix end plate 95 and close the opening, protrusions 94a extending in a longitudinal direction are unitarily provided inside surfaces of case body 94 opposite to each other, as shown in the enlarged sectional view of FIG. 18. In a center part of each protrusion 94a, longitudinal groove 94b extends in the longitudinal direction. In the case where an opening end of longitudinal groove 94b, mentioned above, is used as threaded hole 94c, setscrews 96 passing through end plate 95 are screwed into threaded holes 94c, mentioned above, in both ends of protrusion 94a, so that end plates 95 are fixed to both ends of case body 94.

Although the case body is fixed to the end plate with the setscrews, the above-mentioned battery pack has a disadvantageous structure to vibration, i.e., an internal core block is likely to move relative to an outer case when the battery pack vibrates since the core block accommodated in the outer case is not fixed to the outer case. In order to provide outer case 93 with a waterproof structure, the battery pack shown in FIG. 17 is configured to clamp ring-shaped packing 97 between case body 94 and end plate 95. Since packing 97 is crushed with a fastening force of setscrew 96 to provide water-tight fittings, outer case 93 of this structure is required for fastening setscrew 96 with strong torque. However, if the setscrew is fastened with large torque, protrusion 94a of case body 94 may be twisted locally as shown in the enlarged sectional view of FIG. 18, thereby being likely to damage protrusion 94a and case body 94. For this reason, the case body needs to be molded thickly. This makes it difficult to mold the case body in a thin shape, thereby causing disadvantages such as a large external size, as a whole, and a high manufacturing cost. Further, originally, it is necessary to apply screw processing to the case body as post-processing, and this makes the manufacturing cost higher.

The present invention is made in view of such a conventional background. One of objects is to provide a battery pack preventing a core block, which is accommodated inside an outer case, from moving relative to the outer case effectively while the outer case accommodating the core block is constituted by a main tubular part of a cylindrical shape and covering parts that cover openings at both ends of the main tubular part. Further, in the battery pack, the main tubular part is molded in a thin shape to achieve a light weight and low cost, and cover the openings at both ends of the main tubular body with the covering parts appropriately.

### Solution to Problem

A battery pack in accordance with an aspect of the present invention includes: a core block including battery blocks stacked and interconnected, each of the battery blocks including battery cells arranged at predetermined positions in a battery holder; an outer case including a main tubular part with a tubular shape and a pair of covering parts covering openings at both ends of the main tubular part, the core block being inserted in the main tubular part; and a fastening member fastening the pair of covering parts to cause the pair of covering parts to clamp the main tubular part from both sides of the main tubular part. The core block is accommodated in the outer case such that the battery blocks are stacked in an axial direction of the main tubular part. The fastening member fastens the pair of covering parts through the core block.

### Advantageous Effect of Invention

The above-mentioned battery pack provides an advantageous effect that the openings at both ends of the main tubular part are covered with the covering parts appropriately while simplifying a structure of the main tubular part and reducing the manufacturing cost. That is because this battery pack includes a fastening member to fasten a pair of covering parts through the core block, which is accommodated in the main tubular part, to cover both ends of the main tubular part with the covering parts. The battery pack of this structure reduces the thickness of the main tubular part and achieve lightweight and low-cost mass production, without providing a protrusion for fastening screws on an inner side surface of the main tubular part. Further, the battery pack eliminates fixing failure of the covering part due to breakage of the protrusion, thereby making it possible to cover openings at both ends of the main tubular part with the covering parts over a long period of time stably. Furthermore, since the pair of covering parts are fastened through the core block by the fastening member to cover both the ends of the main tubular part, the above-mentioned battery pack can achieve a feature in which the outer case and the core block accommodated inside the outer case are connected integrally and the core block is prevented from moving relative to the outer case effectively.

### BRIEF DESCRIPTION OF DRAWINGS

FIG. 1 is a schematic configuration diagram of a battery pack in accordance with Exemplary Embodiment 1 of the present invention.
FIG. 2 is a perspective view of the battery pack in accordance with Embodiment 1 of the present invention.
FIG. 3 is an exploded perspective view of the battery pack shown in FIG. 1.
FIG. 4 is a vertical cross-sectional view of the battery pack shown in FIG. 1, which corresponds to a sectional view taken along line IV-IV of FIG. 6.
FIG. 5 is a vertical cross-sectional view of the battery pack shown in FIG. 1, which corresponds to a sectional view taken along line V-V of FIG. 6.
FIG. 6 is a partially enlarged sectional view of the battery pack taken along line VI-VI shown in FIG. 4.
FIG. 7 is a sectional view of the battery pack taken along line VII-VII shown in FIG. 4.
FIG. 8 is a perspective view of a core block constituted by battery blocks.
FIG. 9 is an exploded perspective view of a battery block.
FIG. 10 is an exploded perspective view of an electric block shown in FIG. 9 when viewed from the back.
FIG. 11 is an enlarged sectional view showing another example of a fixing member.
FIG. 12 is a schematic configuration diagram of a battery pack in accordance with Exemplary Embodiment 2 of the present invention.
FIG. 13 is a schematic configuration diagram of a battery pack in accordance with Exemplary Embodiment 3 of the present invention.
FIG. 14 is a schematic configuration diagram of a battery pack in accordance with Exemplary Embodiment 4 of the present invention.
FIG. 15 is a schematic cross-sectional view of a battery pack in accordance with Exemplary Embodiment 5 of the present invention.
FIG. 16A is a schematic cross-sectional view of a battery pack in accordance with a reference example.
FIG. 16B is a schematic cross-sectional view of the battery pack in accordance with the reference example.
FIG. 17 is an exploded perspective view of a conventional battery pack.
FIG. 18 is an enlarged sectional view of a main part of a case body of the battery pack shown in FIG. 17.

### DESCRIPTION OF EMBODIMENTS

A battery pack in accordance with an aspect of the present invention includes a core block including a plurality of battery blocks stacked and interconnected, each of the plurality of battery blocks including a plurality of battery cells arranged at predetermined positions in a battery holder; an outer case including a main tubular part with a tubular shape and a pair of covering parts covering openings at both ends of the main tubular part, the core block being inserted in the main tubular part; and a fastening member fastening the pair of covering parts to cause the pair of covering parts to clamp the main tubular part from both sides of the main tubular part. The core block is accommodated in the outer case such that the battery blocks are stacked in an axial direction of the main tubular part. The fastening member fastens the pair of covering parts through the core block.

In this description, "fastening" means the state of fastening tightly from both sides to be connected, and includes "clamping" in a broad sense. Therefore, in this description, the meaning of "fastening from both sides" does not need to be fixed in an intermediate part, but includes the state of only passing therethrough.

In a battery pack in accordance with another aspect of the present invention, the fastening member includes: a connection member connecting all the plurality of battery blocks of the core block to one another; and a fixing member fixing the pair of covering parts to the core block. The fixing member fixed to the core block connected with the connection member fastens the pair of covering parts.

According to the above-mentioned battery pack, all of battery blocks of the core block are interconnected by the connection member and the pair of covering parts are fastened with the fixing member to be fixed to this core block. Therefore, the pair of covering parts are fastened by the fixing members to cover openings at both ends of the main tubular part appropriately while the battery blocks are interconnected unitarily with the connection member. Especially, in this battery pack, all of the battery blocks which are stacked are fastened by the connection member to constitute the core block. Therefore, the core block is handled easily in a process where the core block is accommodated in an outer case or the like, thereby enhancing efficiency in assembling operation.

In a battery pack in accordance with still another aspect of the present invention, the connection member connects one covering part out of the pair of covering parts to the plurality of battery blocks of the core block.

According to the above-mentioned battery pack, the one covering part and all of the battery blocks of the core block are fastened by the connection member and the other covering part is fixed to the core block by a fixing member to fasten the pair of covering parts. Therefore, the battery blocks are interconnected integrally through the connection member and the openings at both ends of the main tubular part are covered with the covering parts appropriately while the number of parts of fastening member is reduced.

In a battery pack in accordance with still another aspect of the present invention, the fastening member is a connection member connecting all the plurality of battery blocks of the core block to the pair of covering parts.

According to the above-mentioned battery pack, since the pair of covering parts are connected and fastened through the connection member that connects all of the battery cells of the core block to one another, the manufacturing process can be reduced to lower manufacturing costs, while the number of parts of the fastening member is minimized.

In a battery pack in accordance with still another aspect of the present invention, the fastening member includes a fixing member fixing the pair of covering parts to a particular battery block out of the plurality of battery blocks. The fastening member fastens the pair of covering parts through the fixing member fixed to the particular battery block.

According to the above-mentioned battery pack, since the pair of covering parts are fastened through the fixing member to be fixed to the particular battery block out of the battery blocks constituting the core block, the battery pack is not required for a connection member that has a full length enough to fasten all of the battery blocks or the like, but can use a fixing member whose length is shorter than a full length of the core block to fasten the pair of covering parts.

In a battery pack in accordance with still another aspect of the present invention, the battery holder includes: insertion tubular parts having the battery cells inserted therein to hold the plurality of battery cells at predetermined positions; and a connecting protrusion protruding outward from the insertion tubular parts and connected to the fastening member, the insertion tubular parts and the connecting protrusion being unitarily molded. A connecting part to which the fixing member is connected is disposed at the connecting protrusion.

In a battery pack in accordance with still another aspect of the present invention, the fixing member is a fixing screw. This battery pack uses a fixing screw as the fixing member, thereby fastening the covering part tightly while simplifying the structure to reduce the manufacturing cost.

In a battery pack in accordance with still another aspect of the present invention, The battery holder includes: insertion tubular parts having the battery cells inserted therein to hold the battery cells at predetermined positions; and a connecting protrusion protruding outward from the insertion tubular parts and connected to the fastening member, the insertion tubular parts and the connecting protrusion being unitarily molded. An insertion part through which the connection member is inserted is disposed at the connecting protrusion.

In a battery pack in accordance with still another aspect of the present invention, the battery holder includes insertion tubular parts having the battery cells inserted therein to hold the battery cells at predetermined positions, the battery holder having a through-hole adjacent to the insertion tubular parts which opens in parallel with the plurality of insertion tubular parts. The fastening member is inserted through the through-hole.

In the above-mentioned battery pack, the through-hole is provided adjacent to the insertion tubular parts provided in the battery holder and the fastening member is inserted through the through-hole. Therefore, the heat emitted from battery cells is absorbed in the fastening member disposed in the through-hole efficiently when the battery cells generate heat. Especially, since the fastening member inserted through the through-hole is disposed so as to pass through the battery holder, the heat within the battery holder in which the battery cells generating heat are accommodated is conducted to the outside of the battery holder through the fastening member, and thereby radiating the heat efficiently.

In a battery pack in accordance with still another aspect of the present invention, the battery holder includes of insertion tubular parts accommodating therein the battery cells in multiple stages and multiple rows. The fastening member is arranged adjacent to a battery cell out of the battery cells which is disposed at an outer peripheral part of the battery holder.

In the above-mentioned structure, in case where the battery cell disposed at the outer peripheral part of the battery holder is ignited or generates heat due to its abnormal temperature, the heat emitted from the ignited or heat-generating battery cell is conducted to the fastening member. Thus, the heat conducting to a battery cell adjoined to the ignited battery cell can be reduced, thereby preventing the adjoined battery cell from being ignited or generating heat. Especially, since only a few battery cells are adjoined to a battery cell disposed at the outer peripheral part of the battery holder, the temperature of the adjoined battery cell easily rises. However, in this way, with the structure, i.e., since the fastening member is arranged adjacent to a battery cell disposed at an outer peripheral part of the battery holder, the heat conducting to a battery cell adjoined to the ignited battery cell can be reduced even if the battery cell, which is disposed at an outer peripheral part of the battery holder, is ignited or generates heat. This configuration prevents the adjoined battery cell from being ignited or generating heat. As a result, this configuration is effectively prevented from occurring serious thermal accident in which a fire is spread over the entire battery pack, a connection device, and the surrounding thereof.

In a battery pack in accordance with still another aspect of the present invention, each of the pair of covering parts includes a step-shaped protrusion extending along respective one of opening edges of the main tubular part, the step-shaped protrusion being inserted in the main tubular part. An outer circumferential periphery of the each of the pair of covering parts contacts respective one of opening edge surfaces of the main tubular part to cover respective one of openings at both ends of the main tubular part while the step-shaped protrusion is inserted in the respective one of opening edges of the main tubular part.

In the above-mentioned battery pack, the step-shaped protrusion in the covering part allows the covering part to be connected to the main tubular part while being positioned. Thus, the outer circumferential periphery of the covering part, which is to be fastened by the fastening member, contacts the opening edge surface of the main tubular part to cover the openings appropriately.

In a battery pack in accordance with still another aspect of the present invention, the step-shaped protrusion has a ring groove provided in an outer circumference surface of the step-shaped protrusion, and a ring-shaped packing is disposed in the ring groove. The main tubular part is connected to the pair of covering parts with a hermetically sealed structure through the ring-shaped packing.

In the above-mentioned battery pack, the covering part is connected to the main tubular part with a hermetically sealed structure through the ring-shaped packing arranged in an outer circumference surface of the step-shaped protrusion. Especially, this structure is achieved by interposing the packing between the outer circumference surface of the step-shaped protrusion and an inner circumference surface of the main tubular part, rather than pressing the packing in a fastening direction of the covering part to make watertight connection. In the state where the packing is crushed in a direction intersecting the fastening direction of the covering part, a gap between the step-shaped protrusion and the main tubular part is covered, thereby sealing the step-shaped protrusion and the main tubular part securely. For this reason, a waterproofing structure can be maintained over a long period of time appropriately without fastening the covering part tightly to maintain the waterproofing structure of the covering part.

In a battery pack in accordance with still another aspect of the present invention, the main tubular part has a tubular shape with a rectangular cross section having four round corners. An outer circumference shape of the step-shaped protrusion is along an inner circumference surface of the main tubular part.

In the above-mentioned battery pack, since the main tubular part is a rectangular shaped tube with four rounded corners, beautiful appearance and gentle touch can be achieved. Further, since the outer circumference shape of the step-shaped protrusion is shaped along the inner circumference surface of the main tubular part, a ring-shaped packing is arranged reasonably in curved surfaces of the four corners of the square shaped cylinder in cross-sectional view, thereby preventing local deformation of the packing effectively.

Hereinafter, exemplary embodiments of the present invention will be described with reference to the drawings. However, the exemplary embodiments described in the following are illustrative for embodying technical idea of the present invention, and is not to be constructed as limiting the present invention. Further, in the present description, the member described in the claim is absolutely not limited to the member of the exemplary embodiment. Especially, dimensions, materials, shapes, the relative disposition, or the like of components described in the exemplary embodiments are mere examples, and are not intended to limit the scope of the present invention, unless specifically described. Note that, the size, the positional relationship, or the like of the member described in each drawing may be exaggerated to clarify the description. Furthermore, in the following description, like reference signs and names indicate like elements, and detailed description thereof will be omitted, as necessary. Furthermore, for each element constituting the present invention, a plurality of elements may be constituted by the same member such that one member serves as the plurality of elements, or the function of one member may be shared by a plurality of members. Still further, the contents described in one example or exemplary embodiment may be available for the other example or exemplary embodiment.

A battery pack of the present invention, which is mounted mainly on an electric vehicle, supplies electric power to a driving motor. For instance, the present invention is used as a power source of an assistant bicycle, an electric motorcycle, an electric wheelchair, an electric tricycle, an electric cart, or the like. However, the present invention does not specify application of the battery pack, and can also be used as a power source for various kinds of indoor electrical equipment such as a cleaner and a power tool.

### Exemplary Embodiment 1

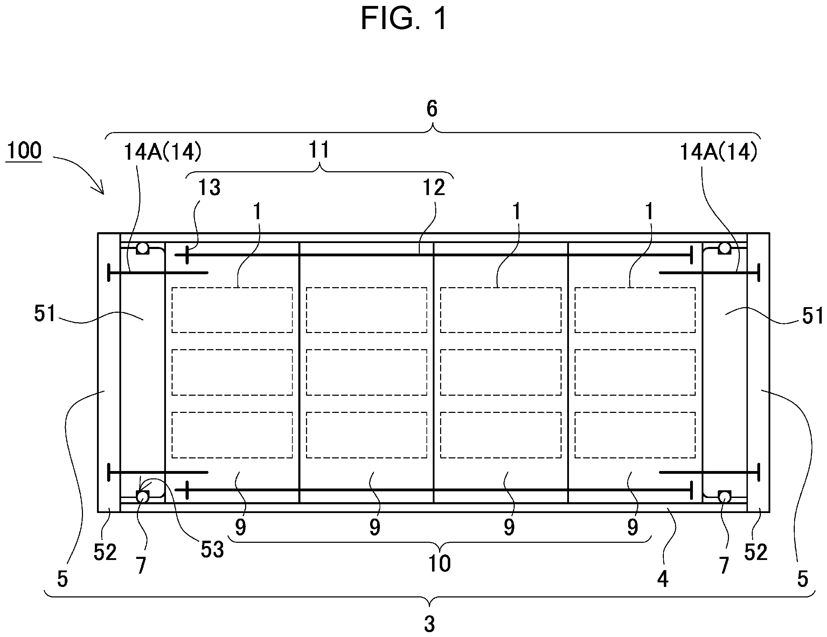

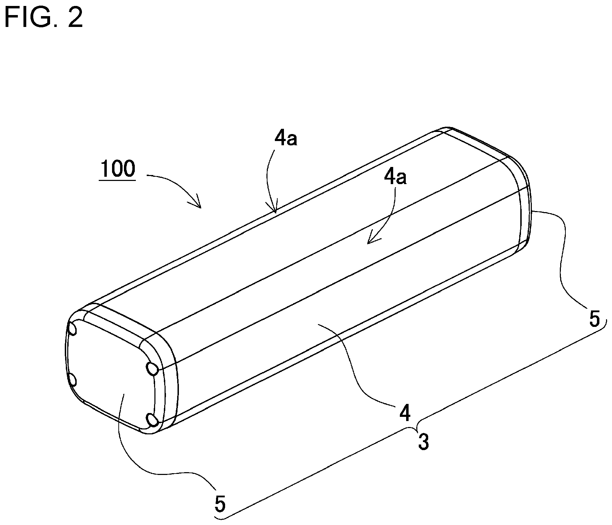

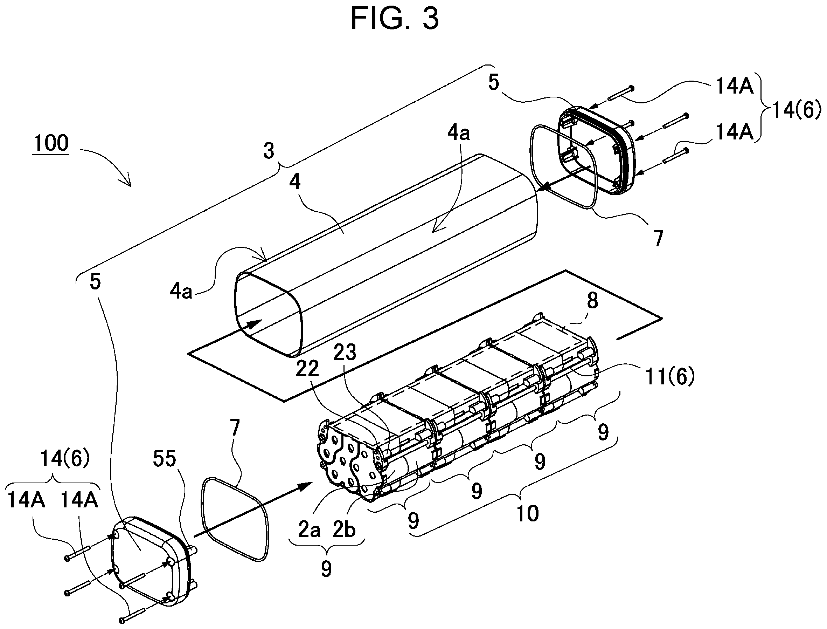

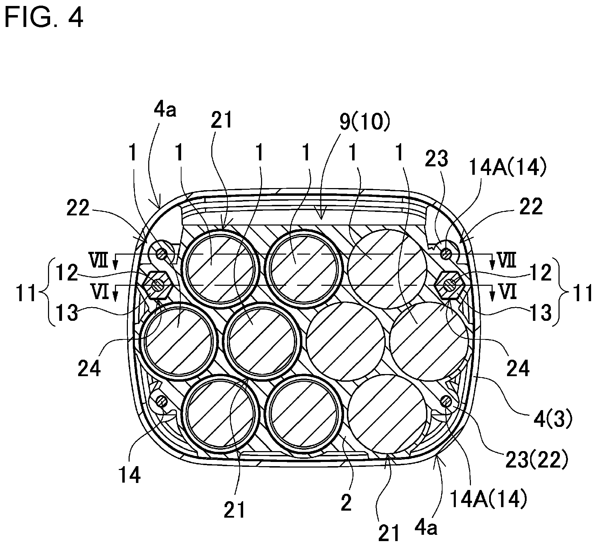

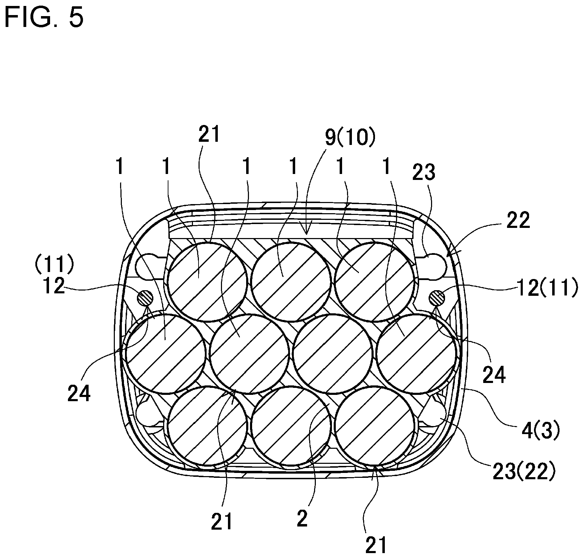

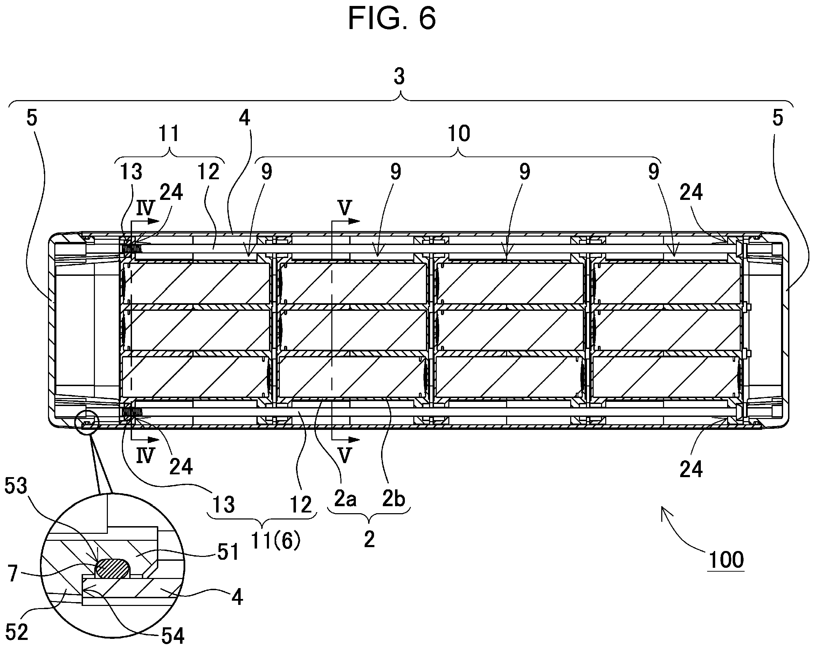

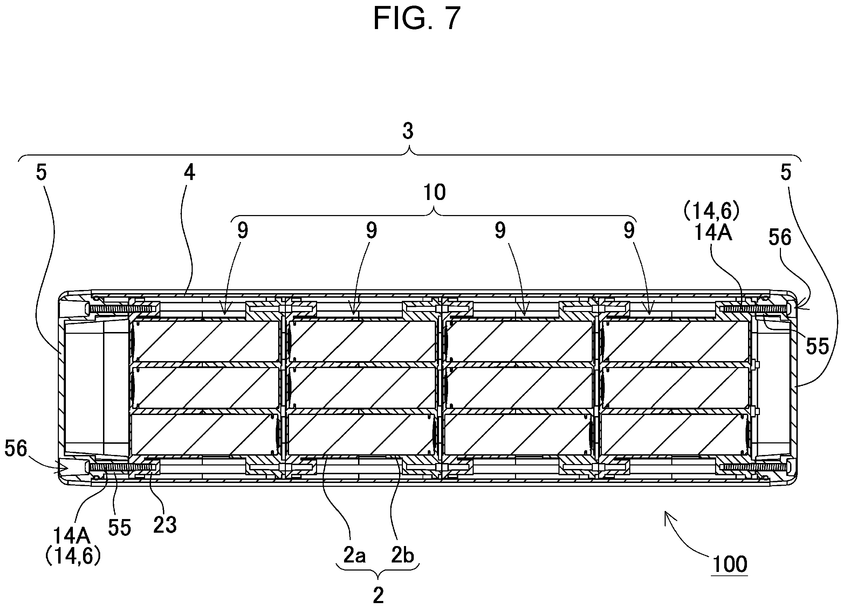

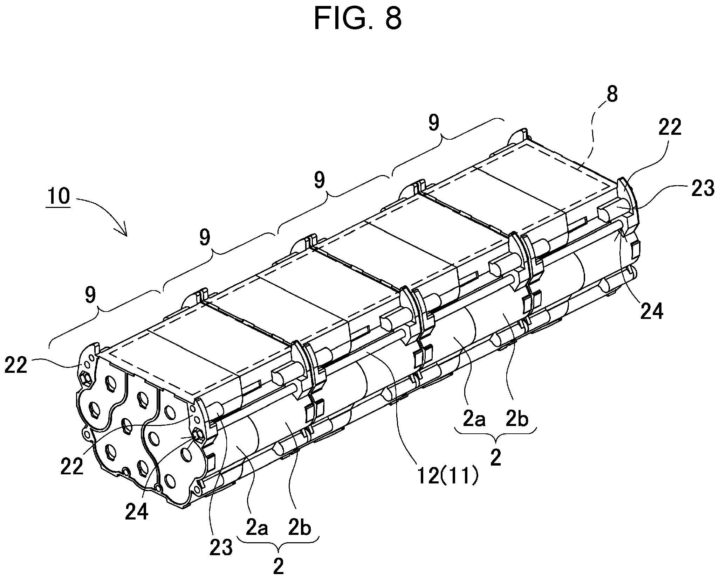

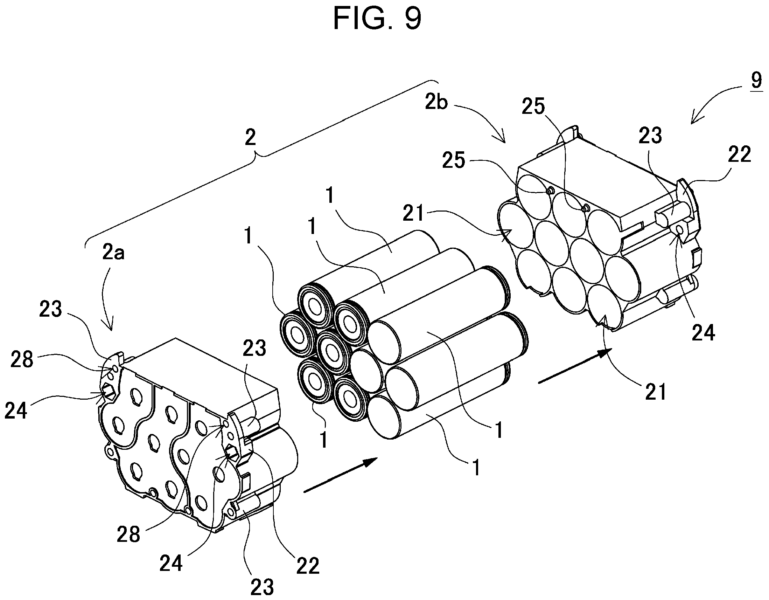

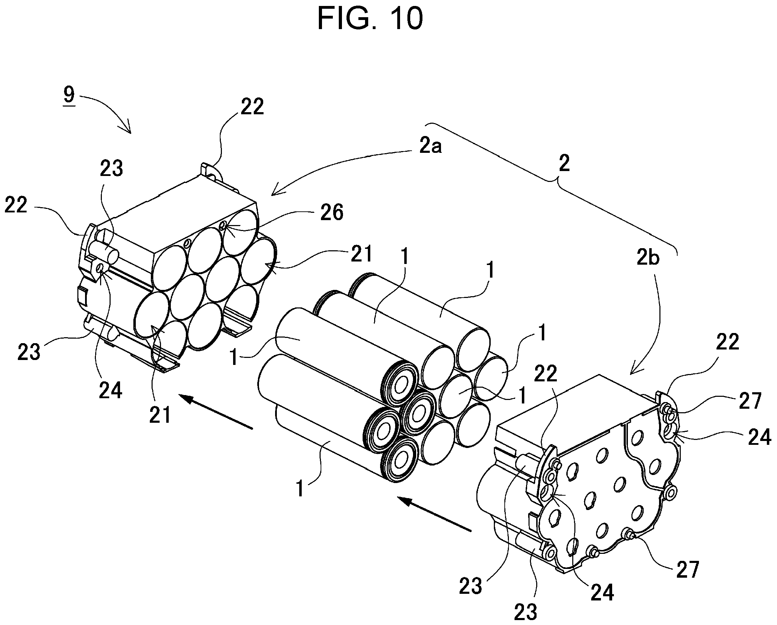

A battery pack in accordance with Exemplary Embodiment 1 of the present invention is shown in FIGS. 1 through 10. FIG. 1 is a schematic configuration diagram of the battery pack. FIG. 2 is a perspective view of the battery pack. FIG. 3 is an exploded perspective view of the battery pack. FIGS. 4 and 5 are vertical cross-sectional views of the battery pack. FIG. 6 is a partially enlarged sectional view of the battery pack taken along line VI-VI of FIG. 4. FIG. 7 is a sectional view of the battery pack taken along line VII-VII of FIG. 4. FIG. 8 is a perspective view of a core block. FIG. 9 is an exploded perspective view of a battery block. FIG. 10 is an exploded perspective view of the battery block when viewed from the back. In the present description, a lateral direction and a vertical direction are defined as directions shown in FIG. 4. In other words, a left-right direction in a paper surface of FIG. 4 is defined as a lateral direction. Further, the longitudinal direction of the battery cell is defined as a longitudinal direction.

Battery pack 100 shown in these figures includes core block 10 including battery blocks 9 stacked and connected to one another, each of battery blocks 9 including battery cells 1 arranged at predetermined positions of battery holder 2; outer case 3 including main tubular part 4 with a tubular shape into which core block 10 is inserted and a pair of covering parts 5 that cover openings at both ends of main tubular part 4; and fastening member 6 that fastens the pair of covering parts 5 and clamps main tubular part 4 from both sides with the pair of covering parts 5. Core block 10 is accommodated inside outer case 3 at such an orientation that battery blocks 9 are stacked in an axial direction of main tubular part 4. Fastening member 6 fastens the pair of covering parts 5 through core block 10.

### Core Block 10

As shown in FIGS. 8 through 10, core block 10 includes battery blocks 9 stacked on one another in the longitudinal direction, which serves as a longitudinal direction of battery cell 1, and connected to one another linearly. Each battery blocks 9 includes battery cells 1 arranged in multiple stages and multiple rows in battery holder 2. Core block 10 shown in FIGS. 6 through 8 includes four battery blocks 9. In core block 10 mentioned above, battery cells 1 are connected in parallel to one another to increase battery capacity (Ah), and battery cells 1 are connected in series to one another to increase output voltage (V). In the battery pack of the present invention, core block 10 shown in the figure includes four battery blocks 9. However, the core block may include three or less sets of battery blocks 9, or may include five or more sets of battery blocks 9.

### Battery Block 9

As shown in FIGS. 9 and 10, in each battery block 9, insertion tubular part 21 of battery cell 1 is provided in battery holder 2, and battery cell 1 is inserted into insertion tubular part 21 to arrange battery cell 1 in a predetermined position. As shown in the exploded perspective views of FIGS. 9 and 10, in battery block 9, chargeable battery cells 1 chargeable are arranged in multiple stages and multiple rows in battery holder 2.

Battery cell 1, a cylindrical chargeable secondary battery, is a lithium-ion secondary battery. However, the battery cell of the present invention is not limited to a lithium-ion battery, but all other chargeable secondary batteries, such as a nickel-hydride battery cell, a nickel-cadmium battery, and a lithium-polymer battery, can be used.

In battery block 9, battery cells 1 are arranged in parallel at such an orientation that longitudinal directions of battery cell 1 are directed in the same direction. A lead plate (not shown) connected to edge electrodes at both ends of battery cell 1 allows battery cells 1 constituting battery block 9 to be connected to obtain the predetermined number of parallel cells and the predetermined number of series cells. Alternatively, battery cells 1 are connected on circuit board 8 shown by a chain line of FIG. 7. In core block 10 shown in FIG. 8, four battery blocks 9 each including ten battery cells are connected with one another, and forty battery cells are connected so as to form four parallel and ten series battery cells as a whole. However, in core block 10, the number of battery cells 1 and the connection form thereof may be changed appropriately.

### Battery Holder 2

As shown in FIGS. 9 and 10, insulated plastic material is molded in the same shape to provide battery holder 2, i.e., insertion tubular part 21 of battery cell 1 and connecting protrusion 22 to which fastening member 6 is to be connected are molded unitarily.

Insertion tubular part 21 holds battery cell 1, which is to be set therein, in a predetermined position. Assumed that a cylindrical battery is employed as battery cell 1, battery holder 2 shown in the figure has a shape allowing the cylinder-shaped battery to be inserted thereinto and held in a predetermined position. However, the battery cell of the present invention is not necessarily limited to a cylindrical battery, but a rectangular shaped battery may be employed as the battery cell. When a rectangular battery is employed as the battery cell, the insertion tubular part of the battery holder has a rectangular tubular shape.

In battery holder 2 shown in the figure, battery cells 1 are arranged like stacking bales, i.e., ten battery cells 1 are vertically arranged in three stages and divided into three rows, four rows, and three rows in this order from the top in each stage, and the vertically positioned battery cell 1 is partially located in a valley between battery cells 1 laterally arranged adjacent to each other.

As shown in FIGS. 9 and 10, battery holder 2 is molded so as to be divided into a pair of cell holders 2a and 2b. Each of cell holders 2a and 2b which constitute battery holder 2 includes insertion tubular parts 21 into which battery cells 1 are inserted in parallel. Both ends of insertion tubular part 21 open to expose an edge electrode of a cylindrical battery to be inserted thereinto, so that a lead plate can be connected to the edge electrode. Insertion tubular parts 21 of cell holders 2a and 2b each have a length enough to insert a half of battery cell 1 thereinto. Each battery cell 1 is arranged in a predetermined position of battery holder 2 such that a half of battery cell 1 is inserted into cell holder 2a on one side and another half thereof is inserted into cell holder 2b on the other side.

A fitting part constituted by fitting protrusion 25 and fitting recess 26 is provided in surfaces of the pair of cell holders 2a and 2b facing each other, thereby enabling mutual connection of the pair of cell holders 2a and 2b in predetermined positions. Fitting protrusions 25 are provided on a right and left sides of an upper end part of cell holder 2b shown in FIG. 9, and fitting recesses 26 are provided on a right and left sides of an upper end part of cell holder 2a shown in FIG. 10. Fitting protrusions 25 face fitting recesses 26. By engaging fitting protrusion 25 with fitting recess 26, the pair of cell holders 2a and 2b are connected so as not to deviate a relative position therebetween. Since battery cell 1 is inserted into insertion tubular parts 21 opposite to each other, the pair of cell holders 2a and 2b are connected in a predetermined position through battery cell 1. Since battery cell 1 is inserted into insertion tubular part 21 divided into two parts, i.e., cell holder 2a and cell holder 2b, battery holder 2 mentioned above provide an advantageous effect that battery cells 1 are held securely while being arranged in predetermined positions. However, the cell holder divided into two parts is not necessarily used to constitute the battery holder. One part holder may be used, or a cell holder divided into three or more parts may be used to constitute the battery holder.

Battery holder 2 has connecting protrusions 22 provided in each of cell holders 2a and 2b. Each connecting protrusion 22 protrudes outward from insertion tubular parts 21. In battery holder 2, connecting protrusions 22 are molded integrally with cell holders 2a and 2b made of plastics. Cell holders 2a and 2b shown in FIG. 9 and 10 each have connecting protrusions 22 provided in its four corners when viewed from the front. Connecting protrusion 22 includes connecting part 23 to which fixing member 14 is connected, and insertion part 24 through which connection member 11 is inserted, which will be detailed later. Herein, fixing member 14 constitutes fastening member 6. In battery holder 2 shown in the figure, insertion part 24 and connecting part 23 are constituted by connecting protrusions 22 formed on both sides of the upper part, and connecting part 23 is constituted by connecting protrusions 22 formed on both sides of the lower part.

Battery holder 2 shown in the figure further includes engaging protrusion 27 and engaging recess 28 for connecting battery blocks 9, which are stacked on one another, to one another in predetermined positions. In battery holder shown in FIGS. 9 and 10, an engaging part constituted by engaging protrusion 27 and engaging recess 28 is provided in surfaces of adjoined battery blocks 9 facing each other, thereby enabling mutual connection of adjoined battery blocks 9 in predetermined positions. Cell holder 2b shown in FIG. 10 has connecting protrusions 22 provided on the right and left side of the upper part, and engaging protrusions 27 provided on the right and left side of the lower end part. Cell holder 2a shown in FIG. 9 has connecting protrusions 22 provided on the right and left sides of the upper part, and engaging recesses 28 provided on the right and left sides of the lower end part opposite thereto. Engaging protrusions 27 are engaged with engaging recesses 28, so that battery blocks 9 adjoined to each other are connected so as not to deviate a relative position therebetween.

### Circuit Board 8

Core block 10 further includes circuit board 8 connected to battery block 9. In core block 10 shown in FIG. 8, circuit board 8 is arranged on upper surfaces of battery blocks 9 that are linearly connected with each other. Circuit board 8 is arranged in a predetermined position through a substrate holder (not shown), for example. Each of lead plates connected to battery cells 1, not illustrated, is connected to circuit board 8 directly or through a connection line. Electronic components for achieving a protection circuit are mounted on circuit board 8. The protection circuit controls a charge and discharge of battery cell 1. The protection circuit further includes a circuit that detects each battery voltage to interrupt charge and discharge current. A temperature detection circuit to detect temperature abnormality of battery cell 1 is mounted on the circuit board.

### Outer Case 3

As shown in FIGS. 2 through 7, outer case 3 includes main tubular part 4 with a tubular shape having both ends opening, and a pair of covering parts 5 that cover openings at both ends of main tubular part 4. In outer case 3 mentioned above, the pair of covering parts 5 are fastened by fastening member 6 to clamp both ends of main tubular part 4 from both sides and cover them while core block 10 is inserted into main tubular part 4.

Main tubular part 4 is made of metal, such as aluminum and an aluminum alloy, with high strength and heat dissipation, for example. Main tubular part 4 with a tubular shape is obtained by processing and molding aluminum. For instance, extrusion molding or pultrusion molding can be applied to aluminum to form the tubular shape. As for main tubular part 4 made of metal, the surface thereof can be covered with a laminate film, vinyl, or the like to be insulated. Main tubular part 4 may made of metal containing another element, such as a magnesium alloy, or a fiber reinforced resin in which reinforcement fibers, such as carbon fiber, a silica fiber, and a glass fiber, are impregnated with a thermosetting resin, such as an epoxy resin, to be harden. Covering part 5 is made of hard plastic. Covering part 5 may be made of metal or a fiber reinforced resin.

Main tubular part 4 is molded to have a rectangular tubular shape with a rectangular cross section, and has both ends opening. In main tubular part 4 with the rectangular tubular shape, four corners are chamfered to form curved surfaces 4a. Since main tubular part 4 has a rectangular tubular shape with four round corners constituted by curved surfaces 4a, outer case 3 of this shape provides beautiful appearance and soft touch.

In order to cover opening ends of main tubular part 4 with sufficient appearance, covering part 5 has an external shape of outer circumferential periphery 52 is shaped along an external shape of main tubular part 4 in cross-sectional view. Furthermore, covering part 5 includes step-shaped protrusion 51 that is along the opening edge of main tubular part 4 and is to be inserted into main tubular part 4. Outer circumferential periphery 52 of covering part 5 contacts the opening edge surface of main tubular part 4 to cover each of openings at both ends of main tubular part 4 in the state where step-shaped protrusion 51 is inserted inside the opening edge of main tubular part 4. In other words, in covering part 5, the external shape of step-shaped protrusion 51 is slightly smaller than an internal shape of main tubular part 4, and the external shape of outer circumferential periphery 52 is almost equal to or slightly larger than the external shape of main tubular part 4. In covering part 5 mentioned above, contact surface 54 of outer circumferential periphery 52 formed in the outside of step-shaped protrusion 51 contacts the opening edge surface of main tubular part 4 to cover each of openings at both ends of main tubular part 4. Step-shaped protrusion 51 in covering part 5 allows covering part 5 to be connected to main tubular part while being positioned in outer case 3. Thus, outer circumferential periphery 52 of covering part 5, which is to be fastened by fastening member 6, contacts the opening edge surface of main tubular part 4 to cover the opening appropriately.

In covering part 5 shown in the figure, ring groove 53 is provided in a circumference surface of step-shaped protrusion 51, and ring-shaped packing 7 is arranged in ring groove 53. In outer case 3 mentioned above, main tubular part 4 is connected to covering part 5 with a hermitically-sealed structure through ring-shaped packing 7 disposed in the outer circumference surface of step-shaped protrusion 51. Especially, this sealed structure is achieved by interposing the packing between the outer circumference surface of step-shaped protrusion 51 and an inner circumference surface of main tubular part 4, rather than pressing the packing in a fastening direction of covering part 5 to make water-tight connection. Packing 7 is crushed in a direction intersecting the fastening direction of covering part 5 to cover between step-shaped protrusion 51 and main tubular part 4 with water-tight connection. Therefore, a crushing amount of packing 7 is not changed, even when fastening member 6 is loosened and main tubular part 4 and covering part 5 move slightly relative to each other. The compressive force of packing 7, i.e., seal pressure is thus not changed, and stabilizing the sealing securely. For this reason, waterproofing structure can be maintained over a long period of time appropriately, without fastening covering part 5 tightly to maintain waterproofing structure of covering part 5. Further, in covering part 8, the outer circumference shape of step-shaped protrusion 51 is along the inner circumference surface of main tubular part 4. In cross-sectional view, since curved surfaces 4a are provided at the four corners of main tubular part 4 to form a rectangular tubular shape, four corners of step-shaped protrusion 51 are curved such that the outer circumference shape of step-shaped protrusion 51 is shaped along this. Thus, ring-shaped packing 7, which is to be set in the outer circumference surface of step-shaped protrusion 51, can reasonably be arranged, thereby preventing local deformation of the packing effectively.

Furthermore, a discharge connector for discharging from built-in battery cell 1 or a charge connector for charging built-in battery cell 1, not illustrated, may be provided in covering part 5. Furthermore, a display part that displays the remaining capacity of battery pack 100 or the like can be provided on a surface of covering part 5. This display part displays the remaining capacity of the battery pack or the like with a lighting state of a light source such as LED, for example.

Furthermore, boss part 55 through which the fastening member is to be inserted is provided inside step-shaped protrusion 51 of covering part 5. Boss part 55, mentioned above, faces connecting part 23 provided in battery holder 2, as shown in FIGS. 3 and 7. Boss part 55, mentioned above, is formed inside step-shaped protrusion 51 to protrude in the longitudinal direction. As shown in FIG. 7, insertion recess 56, which is located on a backend side of boss part 55 to insert fastening member 6 thereinto, is formed in covering part 5. Further, a through-hole through which fastening member 6 passes is opened in boss part 55.

### Fastening Member 6

Fastening member 6 fastens the pair of covering parts 5 and clamps main tubular part 4 from both sides with the pair of covering parts 5. Fastening member 6 fastens the pair of covering parts 5 through core block 10 that is accommodated in outer case 3. Fastening member 6 shown in FIG. 1 and FIGS. 3 through 7 includes connection member 11 connecting battery blocks 9 of core block 10 to one another, and fixing member 14 fixing covering part 5 to core block 10.

Fastening member 6 is a member for clamping main tubular part 4 from both sides by fixing the pair of covering parts 5 to core block 10. In the case where core block 10 includes battery blocks 9 that can be divided, fastening member 6 further includes a member for connecting battery blocks 9 integrally to one another. Accordingly, as an example, fastening member 6 may include connection member 11 for connecting battery blocks 9 to one another and fixing member 14 for fixing covering part 5 to core block 10. In the case that battery blocks 9 constituting core block 10 are fixed integrally to one another through battery holder 2, the member for connecting battery blocks 9 to one another is not necessary. Therefore, in this case, the connection member may be omitted. However, even in such a case, battery blocks connected to one another by the connection member enhances the connection strength.

### Connection Member 11

Connection member 11 linearly connects battery blocks 9 which constitute core block 10 to one another. Connection member 11 shown in the figure includes connection screw 12 that passes through insertion part 24 provided in connecting protrusion 22 of battery holder 2, and nut 13 into which a tip end of connection screw 12, mentioned above, is screwed. Connection screw 12 shown in the figure has a male screw provided in its tip end part while having a screw head in its back end, and has a full length enough to connect four battery blocks 9 to one another. Connection member 11 which is preferably made of metal has a strength enough to clamp battery blocks 9 from both sides and connect them to one another. Connection member 11 made of metal has its large heat capacity to absorb and conduct heat effectively even when battery cell 1 generates heat. In connection member 11 mentioned above, connection screw 12 is inserted through insertion part 24 provided in battery holder 2 of each battery block 9, and nut 13 is connected at the tip end of connection screw 12, so that battery blocks 9 which are linearly arranged are connected integrally to one another. As connection member 11 mentioned above, connection screw 12 passing through battery blocks 9 and nut 13 into which connection screw 12 is screwed are employed. However, the connection screw may be directly screwed into a boss hole provided in the battery holder or the like to be fixed. Furthermore, the connection member is not necessarily limited to the above-mentioned structure, but all other structures, such as a screw rod and a nut, capable of connecting battery blocks 9 to one another may be employed.

In core block 10 shown in FIGS. 4 through 7, connection member 11 inserted through insertion part 24 in connecting protrusion 22 of battery holder 2 is arranged outside battery holder 2. Battery holder 2 shown in FIGS. 4 and 5 includes insertion tubular parts 21 that accommodate battery cells 1 in multiple stages and multiple rows. Connection member 11, serves as fastening member 6, is arranged adjacent to battery cell 1 disposed at an outer peripheral part of battery holder 2. In battery holder 2 of FIGS. 4 and 5, battery cells 1 are vertically arranged in three stages in the figure. Connection members 11 are located outside battery cells 1 disposed on both ends of the upper stage and battery cells 1 disposed on both ends of the middle stage. In other words, connection members 11 are arranged to be located at corner parts of battery holder 2 having substantially a rectangular cross section. In case where battery cell 1 disposed at the outer peripheral part is ignited or generates heat due to internal short circuit or the like, the heat emitted from the ignited battery cell can conduct through connection member 11 arranged in this position, thereby radiating the heat efficiently. Especially, since a full length of connection member 11 is elongated to connect battery cells 1, the heat emitted from the ignited battery cell can be conducted and radiated efficiently due to its large heat capacity. In core block 10 shown in the figure, two connection members 11 are arranged at the corner parts of battery holder 2, but three or more connection members may be arranged in the core block. Further, a through-hole is provided in the battery holder, and the fastening member can be inserted through the through-hole, which will be detailed later.

### Fixing Member 14

As shown in FIG. 7, fixing member 14 passes through covering part 5 and connects a tip end thereof to core block 10, thereby fixing covering part 5 to core block 10. Fixing member 14, which is preferably made of metal, is used to have strength enough to fix core block 10 securely and fasten it. Fixing member 14 made of metal, which has high heat-conducting property, allows the heat of core block 10 to be conducted to the covering part effectively. As fixing member 14 shown in the figure, fixing screw 14A is employed. In battery pack 100 shown in the figure, four corners of covering part 5 are fixed to core block 10 through fixing screws 14A. Fixing screw 14A as fixing member 14 to be inserted into insertion recess 56 of covering part 5 passes through boss part 55 and screwed into battery holder 2, as shown in FIG. 7. As a result, covering part 5 is fixed simply and securely. Fixing screw 14A shown in FIG. 7 is screwed into a connecting boss, serving as connecting part 23, to be fixed to core block 10. Connecting part 23 is provided in battery holder 2 of battery block 9 located closest to covering part 5 in core block 10. Although fixing screw 14A shown in the figure is configured to be screwed directly into connecting part 23 provided in battery holder 2 to be fixed, the fixing screw may be screwed into a nut previously embedded in battery holder 2 or the like to be fixed. This fixing structure allows fixing screw 14A to be fixed to core block 10 more tightly.

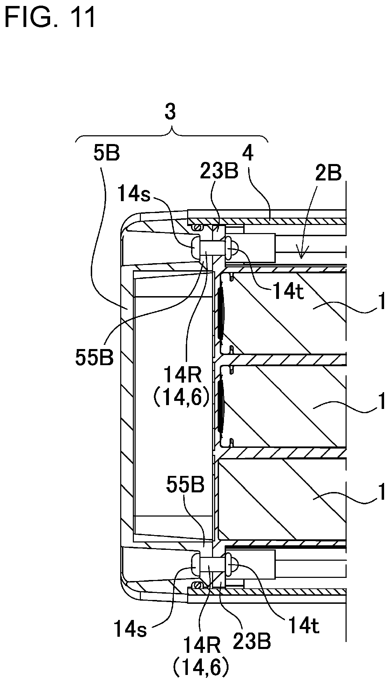

Fixing member 14 is not limited to fixing screw 14A, but all other members capable of connecting covering part 5 to core block 10 may be used. As fixing member 14, rivet 14R as shown in FIG. 11 may be employed, for example. As such rivet 14R, a blind rivet can be used, for example. FIG. 11 shows the state where boss part 55B of covering part 5B and connecting part 23B of battery holder 2B closest to covering part 5B are connected using rivet 14R. After passing through boss part 55B and connecting part 23B, a tip part of rivet 14R, serving as a blind rivet, is crimped. Boss part 55B and connecting part 23B are clamped from both sides between flange part 14s and crimped part 14t to be connected. Here, a rear end part of rivet 14R corresponds to flange part 14s, and a tip end part thereof corresponds to crimped part 14t. This structure allows covering part 5B to be connected to battery holder 2B at the shortest distance. A full length of the rivet may be elongated to connect the covering part to battery holders.

Fastening member 6 mentioned above connects battery blocks 9 to one another through connection member 11 to constitute core block 10. After core block 10, mentioned above, is inserted into main tubular part 4, fixing member 14 passing through covering part 5 is connected to connecting part 23 of battery holder 2 located closest to covering part 5 in core block 10 to be fixed. The pair of covering parts 5 to be fixed to both ends of core block 10 allow main tubular part 4 to be clamped from both sides to cover openings at both ends of the main tubular part 4 with covering part 5.

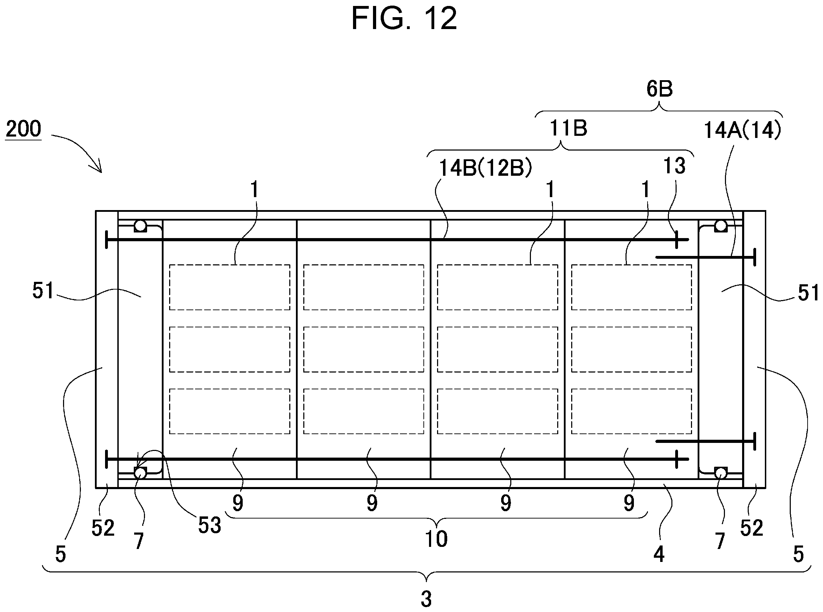

In the battery pack in accordance Embodiment 1, as mentioned above, battery blocks 9 which constitute core block 10 are connected integrally to one another through connection member 11, and fixing members 14 inserted through covering part 5 are connected and fixed to both ends of core block 10, which is integrally connected to one another, to fasten the pair of covering parts 5. In the battery pack, the pair of covering parts may be fastened in the following structures shown in FIGS. 12 through 14.

### Exemplary Embodiment 2

Battery pack 200 shown in FIG. 12 shows an example in which fixing screw 14B inserted through covering part 5 on one side (left-hand side in the figure) is used commonly as connection screw 12B for connecting battery blocks 9 to one another. In battery pack 200 shown in this figure, fixing screw 14B to be inserted through covering part 5 is inserted through all of battery blocks 9, and nut 13 is connected to a tip end of fixing screw 14B. Thus, covering part 5 on the one side and battery blocks 9 are connected integrally with connection member 11B. Here, connection member 11B includes connection screw 12B, serving as fixing screw 14B, and nut 13. In battery pack 200 of this structure, since covering part 5 on the one side and all of battery blocks 9 are connected with fixing screw 14B, serving as connection screw 12B, to constitute core block 10. Therefore, even when any of battery cells 1 in core block 10 is ignited or generates heat, the heat emitted from battery cell 1, mentioned above, is advantageously conducted to covering part 5 through fixing screw 14B, so that the heat can be radiated to the outside of outer case 3 effectively.

With fastening member 6B mentioned above, after covering part 5 on one side (left-hand side in the figure) is connected unitarily to battery blocks 9 using connection member 11B, core block 10 is inserted into main tubular part 4 and then one opening (on a left-hand side in the figure) of main tubular part 4 is covered with covering part 5 mentioned above. In the other opening on the opposite side (right-hand side in the figure), fixing screw 14A passing through covering part 5 on the other side (right-hand side in the figure) is screwed into connecting part 23 of battery holder 2 located closest to covering part 5, mentioned above, to be fixed. Thus, the pair of covering parts 5, which are to be fixed to both ends of core block 10, clamp main tubular part 4 from both sides to cover the openings at both ends of main tubular part 4.

### Exemplary Embodiment 3

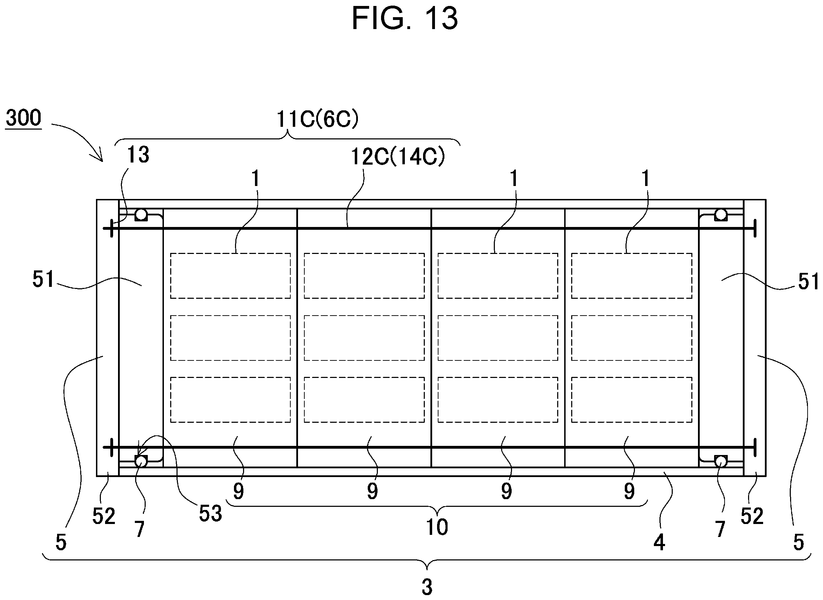

Battery pack 300 shown in FIG. 13 shows an example in which connection member 11C that connects battery blocks 9 to one another is used commonly as fixing screw 14C by which a pair of covering parts 5 are connected to core block 10. In battery pack 300 shown in this figure, connection screw 12C that connects battery blocks 9 to one another is used as fixing screw 14C that is inserted through covering part 5. Connection screw 12C, mentioned above, is inserted through covering part 5 on one side and all of battery blocks 9, and a tip end side of connection screw 12C is inserted through covering part 5 on the other side and connected to nut 13. Thus, all of battery blocks 9 in the core block 10 are connected unitarily to the pair of covering parts 5 with connection member 11C. In battery pack 300 of this structure, the pair of covering parts 5 are connected unitarily to all of battery blocks 9 with fixing screw 14C serving as connection screw 12C. Therefore, even when any of battery cells 1 in core block 10 is ignited or generates heat, the heat emitted from battery cell 1, mentioned above, can advantageously be conducted to covering parts 5 on both sides through fixing screw 14C, so that the heat can be radiated to the outside of outer case 3 more effectively.

With fastening member 6C mentioned above, in the state where connection member 11C is inserted through covering part 5 on one side (right-hand side in the figure) and battery blocks 9, core block 10 is inserted into main tubular part 4 and then one opening (on a right-hand side in the figure) of main tubular part 4 is covered with covering part 5 mentioned above. Further, the other opening of main tubular part 4 on the opposite side (on a left-hand side in the figure) is covered with covering part 5 on the other side (left-hand side in the figure), and a tip end of connection screw 12C passing through covering part 5 mentioned above is connected with nut 13. Thus, the pair of covering parts 5, which are to be fixed to both ends of core block 10, clamp main tubular part 4 from both sides to cover the openings at both ends of main tubular part 4.

### Exemplary Embodiment 4

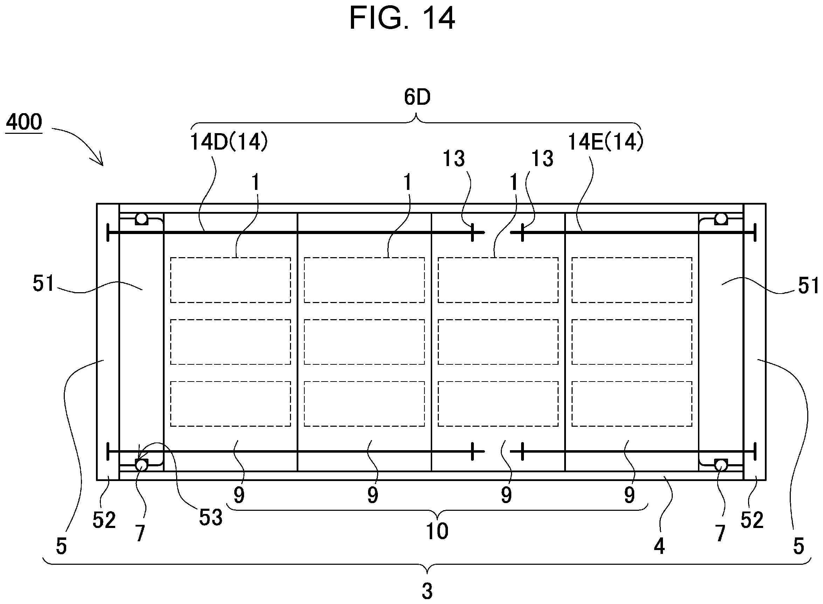

In battery pack 400 shown in FIG. 14, fastening member 6D includes fixing screws 14D and 14E that fix the pair of covering parts 5 to particular battery block 9 in core block 10. In battery pack 400 mentioned above, battery blocks 9 constituting core block 10 are configured to be interconnected and fixed when fixing screws 14D and 14E inserted through covering part 5 are fixed to core block 10. In the example shown in FIG. 14, fixing screws 14D and 14E are inserted into particular battery block 9 from both sides and fixed. Here, particular battery block 9 out of battery blocks 9 constituting core block 10 is located in the middle of core block 10. The pair of covering parts 5 are fixed to core block 10 through the pair of fixing screws 14D and 14E, which are to be fixed to battery block 9 mentioned above. In particular battery block 9 to which fixing screws 14D and 14E are fixed, if nuts 13 are previously arranged in positions into which fixing screws 14D and 14E are screwed, fixing screws 14D and 14E can tightly be fixed to battery blocks 9. In battery pack 400 of this structure, covering parts 5 and all of battery blocks 9 are connected with fixing screws 14D and 14E. Therefore, even when any of battery cells 1 in core block 10 is ignited and generates heat, the heat emitted from battery cell 1, mentioned above, can advantageously be conducted to covering parts 5 through any of fixing screws 14D and 14E, so that the heat can be radiated to the outside of outer case 3 effectively.

In fastening member 6D mentioned above, battery blocks 9 connected to one another are inserted into main tubular part 4 in the state where covering part 5 on one side (left-hand side in the figure) is connected to the predetermined number (three in the figure) of battery blocks 9 using fixing screw 14D and nut 13, and one opening (on a left-hand side in the figure) of main tubular part 4 is covered with covering part 5 mentioned above. Furthermore, fixing screw 14E is inserted through covering part 5 on the other side (right-hand side in the figure) and the predetermined number (one in the figure) battery blocks 9, and a tip end of fixing screw 14E, which is inserted therethrough, is connected to battery block 9 to which fixing screw 14D is connected. The pair of covering parts 5 are thus fastened through fixing screws 14D and 14E fixed to particular battery block 9 (third battery block from the left in the figure). Further, battery blocks 9 are connected integrally to one another through fixing screws 14D and 14E connected to particular battery block 9 to constitute core block 10. In battery pack 400 mentioned above, covering parts 5 disposed at both ends of core block 10 are fixed to particular battery block 9 located in the middle of core block 10 through fixing screws 14D and 14E. Thus, the pair of covering parts 5 clamp main tubular part 4 from both sides to cover openings at both ends of main tubular part 4.

### Exemplary Embodiment 5

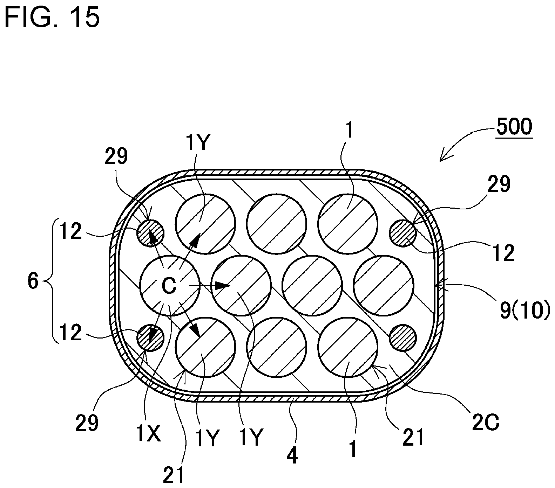

Furthermore, battery pack 500 shown in FIG. 15 shows an example in which connection screw 12, serving as fastening member 6, passes through battery holder 2C. Battery holder 2C mentioned above includes insertion tubular parts 21 in which battery cells 1 are accommodated in multiple stages and multiple rows. In battery holder 2C, through-holes 29 are provided adjacent to insertion tubular parts 21 and open in parallel with insertion tubular parts 21. In battery holder 2C of FIG. 15, battery cells 1 are vertically arranged in three stages in the figure. Each of upper through-holes 29 is located outside a corresponding one of battery cells 1 disposed at both ends of the upper stage and at both ends of the middle stage, and opened. Each of lower through-holes 29 is located outside a corresponding one of battery cells 1 disposed at both ends of the lower stage and at both ends of the middle stage, and opened. In other words, battery holder 2C in the figure has substantially a rectangular cross section and has four through-holes 29 located in its four corners and opened. Each through-hole 29 is disposed adjacent to battery cell 1 disposed at an outer peripheral part of battery holder 2C. In battery pack 500 of FIG. 15, connection screw 12, serving as fastening member 6, passes through each through-hole 29 of battery holder 2C. In battery pack 500 of this structure, connection screw 12 passing through battery holder 2C, mentioned above, advantageously prevents chained catching fire and fire spreading, as shown in the following.

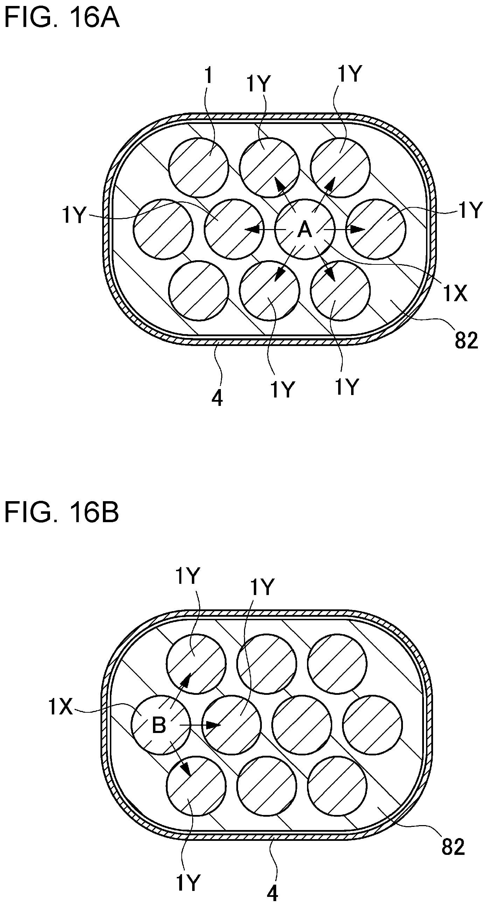

As shown in a reference example of FIG. 16, in case where one of battery cells 1 arranged in battery holder 82 is ignited or generates heat due to internal short circuit or the like, battery cell 1Y adjoined to ignited battery cell 1X receives the heat and its temperature rises. If the temperature rises intensively, adjoined battery cell 1Y may be ignited or generates heat accordingly. As a result, other battery cells 1 are likely to cause chained ignition or heat-generation, thereby causing serious thermal damage in which a fire is spread over the entire battery pack, a connection device, or the surroundings.

The heat emitted from ignited battery cell 1X is conducted radially to the surroundings. At this moment, if all the parts included in an area affected by the emitted heat each have a heat capacity Mi and a temperature rise ΔTi, Q = Σ(Mi×ΔTi) is obtained. Since adjoined battery cell 1Y is also included in all the parts, Q = Σ{M(i)×ΔT(i)+M(1Y)×ΔT(1Y)} is obtained. To reduce temperature rise ΔT(1Y) of adjoined battery cell 1Y, the heat capacity of adjoined battery cell 1Y may be increased, or a component having a heat capacity as large as possible may be provided in the area affected by the emitted heat. Battery cell 1 includes a package can made of metal, electrode groups, or the like. The electrode groups are obtained by winding an elongated separator without gaps after the elongated separator is arranged between an elongated positive electrode plate and an elongated negative electrode plate. Therefore, battery cell 1 has a larger heat capacity than other components, e.g., a resin component such as battery holder 82.

For instance, in FIG. 16A, in case where battery cell 1 out of battery cells 1 arranged inside battery holder 82 which is denoted by the reference character "A" is ignited or generates heat, the heat emitted from the ignited battery cell 1X is conducted to six adjoined battery cells 1Y arranged around the ignited battery cell 1X. In this case, since the adjoined battery cells are arranged radially and symmetrically about ignited battery cell 1X, the heat is almost uniformly conducted, i.e., approximately one-sixth of the heat is conducted to each of six adjoined battery cells 1Y.

On the other hand, in FIG. 16B, in case where battery cell 1 out of battery cells 1 disposed at an outer peripheral part of battery holder 82 which is denoted by a reference character "B" is ignited or generates heat, the heat emitted from the ignited battery cell 1X is conducted to three adjoined battery cells 1Y arranged around the ignited battery cell 1X. In this case, the heat is almost uniformly conducted, i.e., approximately one-third of the heat is conducted to each of three adjoined battery cells 1Y. Therefore, in FIG. 16B, a heat amount conducted to adjoined battery cell 1Y is increased compared with the case of FIG. 16A, and the temperature of adjoined battery cell 1Y easily rises by the amount, so that adjoined battery cell 1Y may cause chained ignition or heat-generation with ease.

As a result, the temperature rise in adjoined battery cell 1Y depends on a position of ignited battery cell 1X. When battery cell 1 disposed at the outer peripheral part of battery holder 2 is ignited or generates heat, the temperature rises in battery cell 1 becomes largest.

On the other hand, as shown in FIG. 15, metallic connection screw 12, serving as fastening member 6, arranged adjacent to battery cell 1 denoted by the reference character "C" that is disposed at the outer peripheral part of battery holder 2C allows the heat emitted from ignited battery cell 1X to be conducted to not only three adjoined battery cells 1Y arranged around the ignited battery cell 1X but also connection screw 12. Thus, a heat amount conducted to adjoined battery cell 1Y can be reduced, so that the temperature rise of adjoined battery cell 1Y may be controlled to prevent chained ignition and heat-generation. Especially, since connection screw 12 inserted as fastening member 6 is inserted to pass through battery blocks 9, a full length of connection screw 12 is elongated and a heat capacity thereof is large. In addition to the feature in which being made of metal having a good thermal conductivity, connection screw 12 is more suitable.

### INDUSTRIAL APPLICABILITY

A battery pack in accordance with the present invention is suitably useable to a battery pack that is mounted on an electric vehicle and supplies electric power to a motor for driving, e.g., a power source of an assistant bicycle, an electric motorcycle, an electric wheelchair, an electric tricycle, an electric cart, or the like.

### REFERENCE MARKS IN THE DRAWINGS

- 100, 200, 300, 400, 500: battery pack
- 1: battery cell
- 1X: ignited battery cell
- 1Y: adjoined battery cell
- 2, 2B, 2C: battery holder
- 2a: cell holder
- 2b: cell holder
- 3: outer case
- 4: main tubular part
- 4a: curved surface
- 5, 5B: covering part
- 6, 6B, 6C, 6D: fastening member
- 7: packing
- 8: circuit board
- 9: battery block
- 10: core block
- 11, 11B, 11C: connection member
- 12, 12B, 12C: connection screw
- 13: nut
- 14: fixing member
- 14A, 14B, 14C, 14D, 14E: fixing screw
- 14R: rivet
- 14s: flange part
- 14t: caulking part
- 21: insertion tubular part
- 22: connecting protrusion
- 23, 23B: connecting part
- 24: insertion part
- 25: fitting protrusion
- 26: fitting recess
- 27: engaging protrusion
- 28: engaging recess
- 29: through-hole
- 51: step-shaped protrusion
- 52: outer circumferential periphery
- 53: ring groove
- 54: contact surface
- 55, 55B: boss part
- 56: insertion recess
- 82: battery holder
- 90: core block
- 92: battery holder
- 93: outer case
- 94: case body
- 94a: protrusion
- 94b: longitudinal groove
- 94c: threaded hole
- 95: end plate
- 96: setscrew
- 97: packing

## Claims

1. A battery pack comprising:
a core block including a plurality of battery blocks stacked and interconnected, each of the plurality of battery blocks including a plurality of battery cells arranged at predetermined positions in a battery holder;
an outer case including a main tubular part with a tubular shape and a pair of covering parts covering openings at both ends of the main tubular part, the core block being inserted in the main tubular part; and
a fastening member fastening the pair of covering parts to cause the pair of covering parts to clamp the main tubular part from both sides of the main tubular part, wherein
the core block is accommodated in the outer case such that the plurality of battery blocks are stacked in an axial direction of the main tubular part, and
the fastening member fastens the pair of covering parts through the core block.

2. The battery pack according to claim 1, wherein
the fastening member includes:
a connection member connecting all the plurality of battery blocks of the core block to one another; and
a fixing member fixing the pair of covering parts to the core block, and
the fixing member fixed to the core block connected with the connection member fastens the pair of covering parts.

3. The battery pack according to claim 2, wherein the connection member connects one covering part out of the pair of covering parts to the plurality of battery blocks of the core block.

4. The battery pack according to claim 1, wherein the fastening member is a connection member connecting all the plurality of battery blocks of the core block to the pair of covering parts.

5. The battery pack according to claim 1, wherein
the fastening member includes a fixing member fixing the pair of covering parts to a particular battery block out of the plurality of battery blocks, and
the fastening member fastens the pair of covering parts through the fixing member fixed to the particular battery block.

6. The battery pack according to any one of claims 2, 3, and 5, wherein
the battery holder includes:
a plurality of insertion tubular parts having the plurality of battery cells inserted therein to hold the plurality of battery cells at predetermined positions; and
a connecting protrusion protruding outward from the plurality of insertion tubular parts and connected to the fastening member, the plurality of insertion tubular parts and the connecting protrusion being unitarily molded, and
a connecting part to which the fixing member is connected is disposed at the connecting protrusion.

7. The battery pack according to any one of claims 2, 3, 5, and 6, wherein the fixing member is a fixing screw.

8. The battery pack according to any one of claims 2 to 4, wherein
the battery holder includes:
a plurality of insertion tubular parts having the plurality of battery cells inserted therein to hold the plurality of battery cells at predetermined positions; and
a connecting protrusion protruding outward from the plurality of insertion tubular parts and connected to the fastening member, the plurality of insertion tubular parts and the connecting protrusion being unitarily molded, and
an insertion part through which the connection member is inserted is disposed at the connecting protrusion.

9. The battery pack according to any one of claims 1 to 5, wherein
the battery holder includes a plurality of insertion tubular parts having the plurality of battery cells inserted therein to hold the plurality of battery cells at predetermined positions, the battery holder having a through-hole adjacent to the plurality of insertion tubular parts which opens in parallel with the plurality of insertion tubular parts,
the fastening member is inserted through the through-hole.

10. The battery pack according to any one of claims 1 to 9, wherein
the battery holder includes a plurality of insertion tubular parts accommodating therein the plurality of battery cells in multiple stages and multiple rows, and
the fastening member is arranged adjacent to a battery cell out of the plurality of battery cells which is disposed at an outer peripheral part of the battery holder.

11. The battery pack according to any one of claims 1 to 10, wherein
each of the pair of covering parts includes a step-shaped protrusion extending along respective one of opening edges of the main tubular part, the step-shaped protrusion being inserted in the main tubular part, and
an outer circumferential periphery of the each of the pair of covering parts contacts respective one of opening edge surfaces of the main tubular part to cover respective one of openings at both ends of the main tubular part while the step-shaped protrusion is inserted in the respective one of opening edges of the main tubular part.

12. The battery pack according to claim 11, wherein
the step-shaped protrusion has a ring groove provided in an outer circumference surface of the step-shaped protrusion, and a ring-shaped packing is disposed in the ring groove, and
the main tubular part is connected to the pair of covering parts with a hermetically sealed structure through the ring-shaped packing.

13. The battery pack according to claim 12, wherein
the main tubular part has a tubular shape with a rectangular cross section having four round corners, and
an outer circumference shape of the step-shaped protrusion is along an inner circumference surface of the main tubular part.
